# FASCICULE DE BREVET EUROPEEN

(11) **EP 1 729 469 B1**
(45) Date de publication et mention de la délivrance du brevet: **03.10.2007**
(21) Numéro de dépôt: 06300263.8
(22) Date de dépôt: 22.03.2006
(51) Int. Cl.: H04L 12/56

(54) **Pré-réservation de ressources pour des chemins de connexion dans un réseau de communication à commutation d'adresses de paquets ou d'étiquettes**
Vorreservierung von Ressourcen für Verbindungswege in einem Kommunikationsnetz an Kommunikation von Anschriften von Päckchen oder von Etiketten
Resources pre-reservation for connection paths in a communication network using address switching or label switching

(30) Priorité: 02.06.2005 FR 0551468
(43) Date de publication de la demande: 06.12.2006
(73) Titulaire: Alcatel Lucent, 75008 Paris (FR)
(72) Inventeur: Verchere, Dominique, 91650 Breuillet (FR); Brockmann, Steffen, 71696 Moglingen (DE); Vigoureux, Martin, 75015 Paris (FR)
(74) Mandataire: Chaffraix, Sylvain

(56) Documents cités:
- EP-A- 1 313 271
- XU Y ET AL: "GENERALIZED MPLS-BASED DISTRIBUTED CONTROL ARCHTECTURE FOR AUTOMATICALLY SWITCHED TRANSPORT NETWORKS" BELL LABS TECHNOLOGY, BELL LABORATORIES, MURREY HILL, NJ, US, vol. 6, no. 1, janvier 2001 (2001-01), pages 33-49, XP001099877 ISSN: 1089-7089
- LI G ET AL: "CONTROL PLANE DESIGN FOR RELIABLE OPTICAL NETWORKS" IEEE COMMUNICATIONS MAGAZINE, IEEE SERVICE CENTER,NEW YORK, NY, US, vol. 40, no. 2, février 2002 (2002-02), pages 90-96, XP001125423 ISSN: 0163-6804

## Description

L'invention concerne les réseaux utilisant des mécanismes de réservation de ressources pour des chemins de connexion, et en particulier les réseaux à commutation d'adresses de paquets (comme par exemple les réseaux à protocole Internet ou (IP)) et les réseaux à commutation d'étiquettes présentant une architecture MPLS (pour « Multi Protocol Label Switching ») ou GMPLS (pour « Generalized MPLS »).

Comme le sait l'homme de l'art, dans les réseaux précités, et notamment dans ceux à commutation d'étiquettes (ou « label switched network »), la réservation des ressources, nécessaires à l'établissement et l'utilisation d'un chemin de connexion (par exemple un LSP (pour « Label Switched Path »)), débute lorsque la requête d'établissement dudit chemin de connexion est transmise par le noeud source, qui requiert ledit établissement, au noeud de sortie (ou destinataire) ainsi qu'aux éventuels noeuds intermédiaires qui participe(nt) audit chemin de connexion.

Un tel noeud est décrit, par exemple, dans le document EP-A-1313271.

Il est rappelé qu'une requête d'établissement comprend la définition des ressources qui sont nécessaires à l'établissement et l'utilisation d'un chemin de connexion. Elle est transmise au moyen d'un message de signalisation conforme, par exemple, au protocole de signalisation RSVP-TE (« ReSerVation Protocol - Traffic Engineering »).

A réception d'une requête d'établissement, la réservation des ressources permettant d'établir un chemin de connexion commence. Cette réservation se fait à deux niveaux différents : le plan de contrôle (ou « control plane ») et le plan de données (ou « data plane »). La réservation au niveau du plan de contrôle est de type logiciel (ou « software »). La réservation au niveau du plan de données est de type physique (ou « hardware »). Elle nécessite une allocation de ressources effective, et donc la configuration des matrices de routage des noeuds du chemin de connexion.

A l'instant où une requête est transmise, il n'y a pas de garantie que les ressources nécessaires à l'établissement et l'utilisation d'un chemin de connexion soient disponibles au niveau du plan de données. Or, si les ressources sont indisponibles le chemin de connexion concerné ne peut pas être établi, ce qui peut être dommageable pour son utilisateur.

L'invention a donc pour but de remédier à l'inconvénient précité.

Elle propose à cet effet un noeud à commutation d'adresses de paquets ou d'étiquettes, pour un réseau de communication à commutation d'adresses de paquets ou d'étiquettes présentant une architecture de type (G)MPLS, comprenant des moyens de signalisation chargés d'échanger des messages de signalisation avec d'autres noeuds à commutation d'étiquettes (du réseau), afin de permettre la réservation de ressources de chemins de connexion associés chacun à un identifiant de connexion et débutant au niveau de leur noeud.

Ce noeud à commutation d'adresses de paquets ou d'étiquettes se caractérise par le fait qu'il comprend des moyens de contrôle chargés, d'une part, de former des intervalles d'utilisation de chemins de connexion à établir entre leur noeud et au moins un noeud de sortie (du réseau), et d'autre part, de commander aux moyens de signalisation de transmettre aux noeuds devant participer à chacun des chemins de connexion à établir des messages de signalisation contenant les identifiants de connexion des chemins de connexion auxquels ils doivent participer et des données de programmation représentatives de leurs intervalles d'utilisation respectifs (par exemple des intervalles temporels), et leur demandant de pré-réserver, au niveau de leur plan de contrôle, des ressources nécessaires à l'établissement de ces chemins de connexion pendant des plages temporelles fonction des intervalles d'utilisation.

On entend ici par « pré-réserver » le fait de réserver des ressources à l'avance, c'est-à-dire à un instant donné.

Grâce à cette programmation de la réservation, au sein de chaque noeud devant participer à des chemins de connexion, des plages d'utilisation des ressources nécessaires à leurs établissements et utilisations, on est quasi certain, lorsque l'on transmet la requête d'établissement de l'un de ces chemins de connexion, que les ressources correspondantes pourront lui être allouées dans un intervalle de temps connu.

Le noeud à commutation d'adresses de paquets ou d'étiquettes selon l'invention peut comporter d'autres caractéristiques qui peuvent être prises séparément ou en combinaison, et notamment :
- ses moyens de contrôle peuvent être chargés de définir des données de programmation représentatives des dates d'établissement et de fin d'utilisation de chaque intervalle d'utilisation par rapport à une horloge de référence. En variante, ils peuvent être chargés de définir des données de programmation représentatives de la date d'établissement souhaitée et de la durée d'utilisation de chaque intervalle d'utilisation ;
- en présence de chemins de connexion devant être utilisés au moins partiellement en même temps et en cas de ressources locales insuffisantes à une utilisation simultanée, ses moyens de contrôle peuvent être chargés d'établir une hiérarchie entre chemins de connexion en fonction d'au moins un critère choisi, afin de placer les plages d'utilisation les unes par rapport aux autres en fonction de cette hiérarchie entre chemins de connexion associés ;
   ➢ ses moyens de contrôle peuvent être chargés d'établir la hiérarchie en fonction d'un paramètre de qualité de service (QoS) associé à chaque chemin de connexion. Ce paramètre de QoS est par exemple le niveau de priorité associé à l'utilisateur d'un chemin de connexion ;
   ➢ en variante ses moyens de contrôle peuvent être chargés d'établir la hiérarchie en fonction d'un critère d'ordre d'arrivée des données de programmation des différents chemins de connexion ;
- ses moyens de contrôle peuvent être chargés de définir les plages d'utilisation au moyen d'une technique de mise en file d'attente de flux, comme par exemple la technique dite « WFQ » (pour « Weighted Fair Queuing ») ou la technique dite « WRED » (pour « Weighted Random Early Detection ») ;
- ses moyens de signalisation peuvent être chargés d'intégrer les données de programmation dans un objet choisi d'un message de signalisation ;
   ➢ cet objet choisi peut être soit un objet préexistant, soit un nouvel objet dédié.

L'invention est particulièrement bien adaptée, bien que de façon non exclusive, aux réseaux dits « à commutation de paquets » (ou « orientés connexion) qui présentent une architecture MPLS (pour « Multi Protocol Label Switching »), comme par exemple les réseaux ATM, Frame Relay (FR), IP et Ethernet, et aux réseaux dits « à commutation de circuits » (ou de type « non paquet ») qui présentent une architecture GMPLS, comme par exemple les réseaux TDM (tels que SONET/SDH, PDH, G.709), les réseaux à commutation de longueur d'onde ou les réseaux à commutation spatiale (comme par exemple la commutation depuis un port d'entrée vers un port de sortie).

D'autres caractéristiques et avantages de l'invention apparaîtront à l'examen de la description détaillée ci-après, et des dessins annexés, sur lesquels :
- la figure 1 illustre de façon très schématique un exemple d'une partie d'un réseau de communication à commutation d'étiquettes comportant une multiplicité de noeuds selon l'invention, et
- la figure 2 est un diagramme illustrant un exemple de répartition temporelle de plages d'utilisation de chemins de connexion.

Les dessins annexés pourront non seulement servir à compléter l'invention, mais aussi contribuer à sa définition, le cas échéant.

L'invention a pour objet de permettre une pré-réservation des ressources nécessaires à l'établissement et l'utilisation de chemins de connexion dans un réseau utilisant un mécanisme de réservation de ressources pour des chemins de connexion, comme par exemple un réseau à commutation d'adresses de paquets ou d'étiquettes.

Il est rappelé que l'on entend ici par « pré-réserver » le fait de réserver des ressources à l'avance, c'est-à-dire à un instant donné.

Dans ce qui suit, on considère à titre d'exemple non limitatif que le réseau est un réseau à commutation d'étiquettes (de type IP), présentant une architecture MPLS (pour « Multi Protocol Label Switching »). Mais, l'invention n'est pas limitée à ce type de réseau à commutation de paquets. Elle concerne en effet tous les réseaux paquets présentant une architecture MPLS, et notamment les réseaux ATM, Frame Relay (FR) et Ethernet, mais également tous les réseaux à commutation de circuits (ou de type « non paquet ») qui présentent une architecture GMPLS, comme par exemple les réseaux TDM (tels que SONET/SDH, PDH, G.709), les réseaux à commutation de longueur d'onde ou les réseaux à commutation spatiale (comme par exemple la commutation depuis un port d'entrée vers un port de sortie).

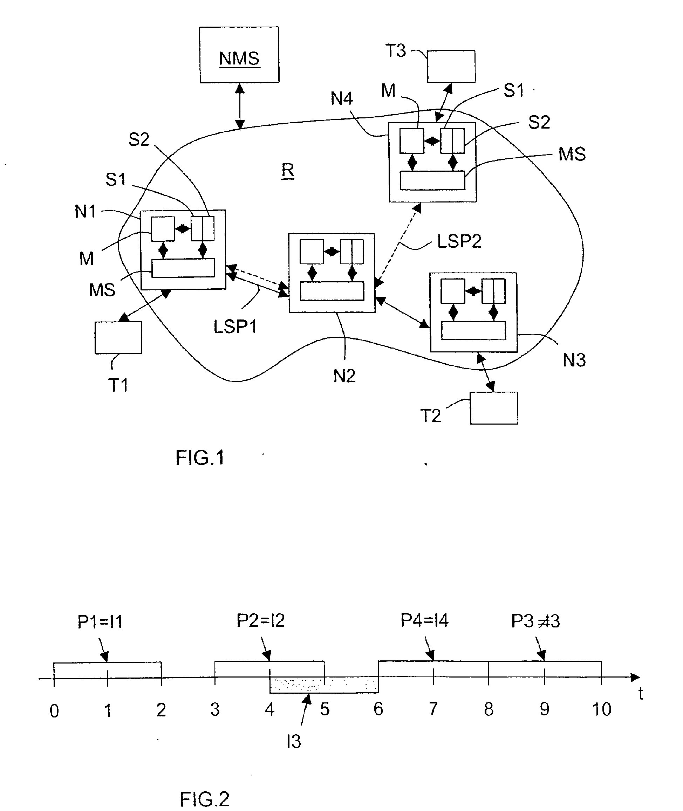

Comme cela est schématiquement illustré sur la figure 1, un réseau à commutation d'étiquettes (ou LSN (pour « Label Switched Network »)) R comprend une multiplicité d'équipements de réseau constituant des noeuds Ni (ici i = 1 à 4, mais il peut prendre n'importe quelle valeur supérieure ou égale à deux). Ces noeuds Ni sont raccordés les uns aux autres et sont chargés de router des paquets de données (ici de type IP) de sorte qu'ils puissent parvenir au niveau d'un noeud de sortie du réseau R.

Les noeuds Ni sont ici ce que l'homme de l'art appelle des routeurs à commutation d'étiquettes (ou LSRs pour « label switch routers »), et plus précisément des routeurs IP/MPLS. Mais dans d'autres applications il pourrait par exemple s'agir de commutateurs Ethernet, ou de brasseurs (ou « cross-connects ») SONET/SDH, ou encore de brasseurs optiques (ou « optical cross-connects ») de type G.709.

Parmi ces noeuds Ni, certains constituent ce que l'on appelle un noeud d'entrée (ou « ingress node »), c'est ici le cas du noeud N1, ou un noeud de sortie (ou « egress node »), c'est ici le cas des noeuds N3 et N4, tandis que d'autres constituent ce que l'on appelle des noeuds intermédiaires, c'est ici le cas du noeud N2.

De tels noeuds d'entrée et de sortie sont placés à deux « extrémités » du réseau R et peuvent être chacun raccordés à au moins un réseau d'utilisateurs ou d'entreprise(s), ici matérialisés schématiquement par des terminaux Tj (ici j = 1 à 3, mais il peut prendre n'importe quelle valeur). Par ailleurs, un noeud d'entrée N1 est couplé à un noeud de sortie N3 (ou N4) via au moins un chemin de connexion (ou chemin à commutation d'étiquettes ― en anglais LSP pour « Label Switched Path ») LSP1 (ou LSP2) définissant chacun une connexion virtuelle (ou « LSP tunnel ») passant par un ensemble de noeuds Ni du réseau R. Dans l'exemple illustré sur la figure 1, le chemin de connexion LSP1 est matérialisé par les flèches à double sens et en trait continu, tandis que le chemin de connexion LSP2 est matérialisé par les flèches à double sens et en tirets.

Il est rappelé qu'un « lien » est une connexion physique entre deux routeurs Ni (par exemple N1 et N2), tandis qu'un « chemin de connexion (ou LSP) » est un trajet entre un routeur d'entrée N1 et un routeur de sortie N3 (ou N4), défini par une séquence de liens physiques reliant deux terminaux (par exemple T1 et T2 (ou T1 et T3)).

Chaque routeur Ni comporte classiquement un module de signalisation MS chargé d'échanger des messages de signalisation avec les modules de signalisation MS qui sont implantés dans les routeurs intermédiaires (ici N2) et les routeurs de sortie (ici N3 et N4). Deux principaux types de message de signalisation sont utilisés : les messages de demande d'établissement de chemin (ou « Path message ») et les messages de réservation (ou « Resv message »).

Les messages de demande d'établissement de chemin sont générés par le module de signalisation MS qui est implanté dans un routeur d'entrée N1 et sont destinés au module de signalisation MS qui est implanté dans le routeur de sortie N3 ou N4. Les messages de réservation sont générés par le module de signalisation MS qui est implanté dans le routeur de sortie N3 ou N4, en réponse à la réception d'un message de demande d'établissement de chemin, et sont destinés au module de signalisation MS qui est implanté dans le routeur d'entrée N1.

Les messages de signalisation sont transmis conformément à un protocole de signalisation, comme par exemple RSVP-TE (« ReSerVation Protocol - Traffic Engineering »). Ces messages comportent de nombreux objets (eux-mêmes constitués d'un ou plusieurs champs) qui ne seront pas détaillés ici, de façon exhaustive, du fait qu'ils sont bien connus de l'homme de l'art.

Il est simplement rappelé qu'un message de demande d'établissement de chemin comprend notamment un objet SENDER_TEMPLATE comportant un champ LSP ID dédié à l'identifiant LSP d'un chemin de connexion, un objet LABEL_SET comportant un champ dédié à une (ou plusieurs) valeur(s) de l'étiquette possible qui peut être attribuée au chemin de connexion ou qui doi(ven)t être exclue(s) pour ledit chemin de connexion, et un objet SESSION_ATTRIBUTE comportant un champ spécifiant si la demande de réservation de ressources est explicitement partagée ou non.

En réponse à cette demande d'établissement de chemin, un message de réservation est généré. Ce message de réservation comprend notamment un objet FILTER_SPEC comportant le champ LSP ID dédié à l'identifiant LSP du chemin de connexion, un objet GENERALIZED_LABEL comportant la valeur du champ attribué à la valeur de l'étiquette du chemin de connexion, et un objet STYLE comportant le champ dédié au type de réservation de ressources (fixe ou partagé).

Les informations contenues dans les messages de signalisation sont stockées pour chaque module de signalisation MS dans des structures de données. Plus précisément, chaque routeur Ni comporte des moyens de mémorisation S1 et S2 dans lesquels sont respectivement stockées des premières structures de données, appelées PSB (pour « Path State Block »), contenant les données définissant chaque chemin de connexion dont il fait partie, et des secondes structures de données, appelées RSB (pour « Reservation State Block »), contenant entre autres les données relatives à l'état des réservation des ressources de chaque chemin de connexion dont il fait partie.

Chaque message de signalisation reçu par un noeud Ni sert à la mise à jour de l'une de ses premières structures de données PSB et de la seconde structure de données RSB associée.

L'invention propose d'adjoindre au module de signalisation MS de certains au moins des routeurs Ni du réseau R, et de préférence dans chacun d'entre eux (comme illustré), un module de contrôle MC chargé notamment de transmettre à des routeurs Ni' devant participer à des chemins de connexion des informations utiles à la programmation de la réservation des ressources nécessaires à leur établissement futur et à leur future utilisation.

Plus précisément, le module de contrôle MC de chaque routeur d'entrée (ici N1) est chargé de deux opérations lorsqu'il est averti que des chemins de connexion LSP doivent être initiés. Le module de contrôle MC peut être averti soit par son propre routeur Ni, lorsqu'il décide lui-même d'initier des chemins de connexion LSP, soit d'un gestionnaire de réseau, par exemple via le système de gestion de réseau NMS (pour « Network Management System ») du réseau R.

La première opération consiste à former des intervalles d'utilisation Ik pour chaque chemin de connexion LSPk qui va devoir être prochainement établi entre son noeud (ici N1) et au moins un noeud de sortie (par exemple N3 ou N4). Pour ce faire, le module de contrôle MC utilise les informations temporelles qui lui sont fournies pour chaque chemin de connexion LSPk dont son routeur constitue la source, à savoir sa date d'établissement (souhaitée ou envisagée) et sa durée d'utilisation.

Un intervalle d'utilisation Ik peut être défini par une date d'établissement et une date de fin d'utilisation, ou par une date d'établissement et une durée d'utilisation. Ces dates sont par exemple fixées par rapport à une horloge de référence qui permet de synchroniser l'horloge interne qui se trouve implantée dans chaque routeur Ni du réseau R.

La seconde opération consiste à commander (ou ordonner) au module de signalisation MS de transmettre aux routeurs Ni qui doivent participer à chacun des chemins de connexion LSPk, qui devront être prochainement établis, des messages de signalisation contenant les identifiants de connexion des chemins de connexion LSPk auxquels ils devront participer et des données de programmation représentatives de leurs intervalles d'utilisation lk respectifs. Ces messages de signalisation sont destinés à demander aux routeurs Ni de pré-réserver (ou réserver en avance, ou encore programmer), au niveau de leur plan de contrôle, les ressources nécessaires à l'établissement des chemins de connexion LSPk, auxquels ils devront prochainement participer, en fonction des intervalles d'utilisation lk correspondants.

Comme indiqué ci-avant, la transmission des données de programmation se fait au moyen de messages de signalisation, par exemple conformes au protocole de signalisation RSVP-TE. Plus précisément, les données de programmation peuvent par exemple être intégrées dans l'un des objets existant que comportent les messages de signalisation traditionnels. Cet objet peut être par exemple SESSION_ATTRIBUTE des messages de type Path message. En variante, on peut adjoindre aux messages de signalisation traditionnels un nouvel objet dédié spécifiquement aux données de programmation. Par exemple, un tel objet additionnel peut être appelé « Time_reservation ».

Les messages de signalisation étant habituellement transmis de proche en proche, c'est-à-dire de routeur à routeur (ou « hop by hop »), un seul message de signalisation suffit généralement à un routeur source (ici N1) pour demander aux autres routeurs devant participer à un chemin de connexion donné LSPk de pré-réserver les ressources nécessaires à l'établissement de ce chemin de connexion LSPk

La pré-réservation de ressources est effectuée localement par le module de contrôle MC de chaque routeur Ni devant participer à un chemin de connexion LSPk, qu'il soit source, de sortie ou intermédiaire. Elle consiste à déterminer localement la plage d'utilisation Pk de chaque chemin de connexion LSPk auquel doit participer le routeur Ni concerné, compte tenu des données de programmation correspondantes et des ressources locales disponibles à chaque instant.

Il est important de noter que des plages d'utilisation Pk, attribuées localement à plusieurs chemins de connexion différents LSPk, peuvent présenter un recouvrement temporel au moins partiel, dès lors qu'il existe localement suffisamment de ressources disponibles pour supporter ces différents chemins de connexion.

Les données représentatives des plages d'utilisation Pk, déterminées par le module de contrôle MC d'un routeur Ni, sont par exemple stockées dans les mémoires S1 et/ou S2, où elles peuvent éventuellement être intégrées dans les structures de données du protocole de signalisation (par exemple dans le champ dit « Path State Block » ou « Resv State Block », ou dans un autre champ).

On a représenté sur la figure 2, à titre d'exemple illustratif et non limitatif, un diagramme de répartition temporelle (t) de plages d'utilisation Pk (ici k = 1 à 4, mais il peut prendre n'importe quelle valeur non nulle) de chemins de connexion LSPk, déterminé par le module de contrôle MC d'un routeur (par exemple N2).

Cet exemple de répartition temporelle correspond à la situation présentée dans la table suivante :

| | Début de plage (t) | Fin de plage (t) | Niveau de priorité |
|---|---|---|---|
| I1(LSP1) | 0 | 2 | 0 |
| I2(LSP2) | 3 | 5 | 0 |
| I3*(LSP3) | 4 | 6 | 1 |
| I4(LSP4) | 6 | 8 | 0 |
| I3(LSP3) | 8 | 10 | 1 |

lci, les intervalles d'utilisation I1 et 14, des chemins de connexion LSP1 et LSP4, ne posent pas de problème car ils ne présentent pas de recouvrement temporel avec un autre intervalle d'utilisation. Par conséquent, les plages d'utilisation P1 et P4 correspondent aux deux intervalles d'utilisation I1 et I4 qui ont été formés par le module de contrôle MC du routeur d'entrée R1 et transmis par le module de signalisation MS de ce dernier.

Par contre, il existe un recouvrement partiel des intervalles d'utilisation I2 et I3 des chemins de connexion LSP2 et LSP3, qui ont été formés par le module de contrôle MC du routeur d'entrée R1 et transmis au routeur N2 (notamment) par le module de signalisation MS dudit routeur d'entrée N1.

Si les ressources disponibles au niveau du routeur N2 dans l'intervalle de temps compris entre t=4 et t=5 sont suffisantes pour permettre l'utilisation simultanée des chemins de connexion LSP2 et LSP3, alors le module de contrôle MC du routeur N2 identifie la plage d'utilisation P2 à l'intervalle d'utilisation 12 et la plage d'utilisation P3 à l'intervalle d'utilisation I3. Mais, tel n'est pas le cas ici.

En effet, on considère ici que les ressources disponibles au niveau du routeur N2 dans l'intervalle de temps compris entre t=4 et t=5 ne sont pas suffisantes pour permettre l'utilisation simultanée des chemins de connexion LSP2 et LSP3. Par conséquent, le module de contrôle MC du routeur N2 doit déterminer pour l'un au moins des chemins de connexion LSP2 et LSP3 une plage d'utilisation différente de l'un des deux intervalles d'utilisation 12 et 13.

Cette détermination de l'ordonnancement temporel des plages d'utilisation Pk, les unes par rapport aux autres, se fait en fonction d'au moins un critère choisi. De nombreux critères peuvent être envisagés.

Ainsi, chaque module de contrôle MC peut être chargé d'établir une hiérarchie entre chemins de connexion en fonction d'au moins un critère choisi. Par exemple, la hiérarchie peut se faire en fonction d'un paramètre de qualité de service (QoS) associé à chaque chemin de connexion. Parmi les paramètres de QoS que l'on peut utiliser, on peut par exemple citer le niveau de priorité qui est généralement associé à l'utilisateur d'un chemin de connexion LSPk.

En variante, chaque module de contrôle MC peut être chargé d'établir une hiérarchie en fonction d'un critère d'ordre d'arrivée des demandes de pré-réservation de ressources au niveau de son routeur Ni. Cette possibilité est notamment envisageable lorsque les données de programmation relatives à des chemins de connexion différents sont transmises par le routeur source (ici N1) dans des messages de signalisation différents (formant des demandes de pré-réservation de ressources). De la sorte, les données de programmation peuvent en effet être classées en fonction de leur ordre d'arrivée. Le critère peut alors consister à privilégier les premières données arrivées au détriment des suivantes, ou bien l'inverse.

On notera que plusieurs critères peuvent être utilisés pour définir la hiérarchie entre chemins de connexion LSPk.

Dans l'exemple illustré sur la figure 2 et dans la table précédente, le critère de priorité utilisé est le niveau de priorité associé à l'utilisateur du chemin de connexion LSPk. Ici, les utilisateurs des chemins de connexion LSP2 et LSP3 disposent respectivement des niveaux de priorité « 0 » et « 1 ». Le niveau « 0 » étant le plus élevé, le chemin de connexion LSP2 est donc prioritaire sur le chemin de connexion LSP3. Le module de contrôle MC du routeur N2 décide donc, par exemple, d'identifier la plage d'utilisation P2 à l'intervalle d'utilisation 12 et de placer la plage d'utilisation P3 du chemin de connexion LSP3 après la plage d'utilisation P4 du chemin de connexion LSP4. Bien entendu, il existe de nombreuses autres possibilités reposant sur d'autres critères.

Afin de déterminer l'ordonnancement temporel des plages d'utilisation Pk, les unes par rapport aux autres, chaque module de contrôle MC peut utiliser une technique de mise en file d'attente de flux (ou « flow based queuing algorithm »), comme par exemple la technique dite « WFQ » (pour « Weighted Fair Queuing ») ou la technique dite « WRED » (pour « Weighted Random Early Detection»).

Il est important de noter que dans certaines circonstances l'un des noeuds Ni (ici des routeurs) peut être dans l'incapacité de pré-réserver des ressources pour l'un au moins des chemins de connexion, soit par ce qu'il n'est pas conforme à l'invention, soit par ce qu'il doit participer à trop de chemins de connexion, soit encore par ce qu'il fait l'objet d'un dysfonctionnement. Dans ce cas, on peut prévoir une procédure de résolution de problème de pré-réservation de ressources. Une telle procédure est définie par des politiques dédiées (ou « policies »). On peut par exemple envisager que le noeud défaillant transmette au noeud source un message d'erreur, signalant éventuellement l'origine de son problème de pré-réservation, et qu'en réponse à ce message d'erreur le noeud source propose aux noeuds devant participer à des chemins de connexion de nouveaux intervalles d'utilisation

Le module de contrôle MC d'un noeud à commutation d'étiquettes Ni (ou à commutation d'adresses de paquets) selon l'invention, peut être réalisé sous la forme de circuits électroniques, de modules logiciels (ou informatiques), ou d'une combinaison de circuits et de logiciels.

L'invention ne se limite pas aux modes de réalisation de noeud décrits ci-avant, seulement à titre d'exemple, mais elle englobe toutes les variantes que pourra envisager l'homme de l'art dans le cadre des revendications ci-après.

Ainsi, dans ce qui précède on a décrit un exemple de mise en oeuvre de l'invention dans des noeuds à commutation d'étiquettes. Mais, l'invention, n'est pas limitée à ce type de noeud. Elle concerne en effet également les noeuds à commutation d'adresses de paquets, et plus généralement tous les noeuds dédiés à la commutation au sein des réseaux qui utilisent un mécanisme de réservation et de gestion distribuée de l'utilisation de ressources au moyen d'un protocole de réservation de ressources.

## Revendications

1. Noeud (Ni) pour un réseau de communication à commutation d'adresses de paquets ou d'étiquettes (R), comprenant des moyens de signalisation (MS) agencés pour échanger des messages de signalisation avec d'autres noeuds (Ni') dudit réseau (R), pour permettre la réservation de ressources de chemins de connexion (LSPk), associés chacun à un identifiant de connexion et débutant au niveau dudit noeud (Ni), **caractérisé en ce qu**'il comprend des moyens de contrôle (MC) agencés pour former des intervalles d'utilisation de chemins de connexion à établir entre ledit noeud (Ni) et au moins un noeud de sortie (N3,N4) dudit réseau (R), et pour commander auxdits moyens de signalisation (MS) de transmettre aux noeuds (Ni') devant participer à chacun desdits chemins de connexion à établir (LSPk) des messages de signalisation contenant les identifiants de connexion des chemins de connexion auxquels ils doivent participer et des données de programmation représentatives de leurs intervalles d'utilisation respectifs et leur demandant de pré-réserver, au niveau de leur plan de contrôle, des ressources nécessaires à l'établissement desdits chemins de connexion (LSPk) pendant des plages temporelles fonction desdits intervalles d'utilisation.

2. Noeud selon la revendication 1, **caractérisé en ce que** lesdits moyens de contrôle (MC) sont agencés pour définir des données de programmation représentatives des dates d'établissement et de fin d'utilisation de chaque intervalle d'utilisation par rapport à une horloge de référence.

3. Noeud selon la revendication 1, **caractérisé en ce que** lesdits moyens de contrôle (MC) sont agencés pour définir des données de programmation représentatives de la date d'établissement souhaitée et de la durée d'utilisation de chaque intervalle d'utilisation.

4. Noeud selon l'une des revendications 1 à 3, **caractérisé en ce qu**'en présence de chemins de connexion (LSPk) devant être utilisés au moins partiellement en même temps et en cas de ressources locales insuffisantes à une utilisation simultanée, lesdits moyens de contrôle (MC) sont agencés pour établir une hiérarchie entre chemins de connexion (LSPk) en fonction d'au moins un critère choisi, de manière à placer lesdites plages d'utilisation les unes par rapport aux autres en fonction de ladite hiérarchie des chemins de connexion associés.

5. Noeud selon la revendication 4, **caractérisé en ce que** lesdits moyens de contrôle (MC) sont agencés pour établir ladite hiérarchie en fonction d'un paramètre de qualité de service associé à chaque chemin de connexion.

6. Noeud selon la revendication 5, **caractérisé en ce que** ledit paramètre de qualité de service est un niveau de priorité associé à l'utilisateur d'un chemin de connexion.

7. Noeud selon la revendication 4, **caractérisé en ce que** lesdits moyens de contrôle (MC) sont agencés pour établir ladite hiérarchie en fonction d'un critère d'ordre d'arrivée desdites données de programmation relatives aux différents chemins de connexion.

8. Noeud selon l'une des revendications 1 à 7, **caractérisé en ce que** lesdits moyens de contrôle (MC) sont agencés pour définir lesdites plages d'utilisation au moyen d'une technique de mise en file d'attente de flux.

9. Noeud selon la revendication 8, **caractérisé en ce que** ladite technique est choisie dans un groupe comprenant au moins les techniques dites « WFQ » et « WRED ».

10. Noeud selon l'une des revendications 1 à 9, **caractérisé en ce que** lesdits moyens de signalisation (MS) sont agencés pour intégrer lesdites données de programmation dans un objet choisi d'un message de signalisation.

11. Noeud selon la revendication 10, **caractérisé en ce que** ledit objet est choisi dans un groupe comprenant au moins un objet préexistant et un nouvel objet dédié.

## Claims

1. A node (Ni) for a packet-address-switched or label-switched communication network (R), comprising signalling means (MS) adapted to exchange signalling messages with other nodes (Ni') of said network (R) in order to reserve resources of connecting paths (LSPk) each associated with a connection identifier and beginning at said node (Ni), **characterised in that** it comprises control means (MC) adapted to form intervals of use of connecting paths to be set up between said node (Ni) and at least one output node (N3, N4) of said network (R) and to command said signalling means (MS) to transmit to nodes (Ni') that will have to participate in each of said connecting paths (LSPk) to be set up signalling messages containing connection identifiers of the connecting paths in which they will have to participate and programming data representing their respective intervals of use and requesting them to prereserve resources at the level of their control plane needed for setting up said connecting paths (LSPk) during time ranges that are a function of said intervals of use.

2. A node according to claim 1, **characterised in that** said control means (MC) are adapted to define programming data representing setting up times of day and end of use times of day of each interval of use relative to a reference clock.

3. A node according to claim 1, **characterised in that** said control means (MC) are adapted to define programming data representing the required setting up time of day and the duration of use of each interval of use.

4. A node according to any of claims 1 to 3, **characterised in that** said control means (MC) are adapted, in the presence of connecting paths (LSPk) to be used at least partly simultaneously and in the event of local resources being insufficient for simultaneous use, to set up a hierarchy of connecting paths (LSPk) as a function of at least one selected criterion so as to place said ranges of use relative to each other as a function of said hierarchy of the associated connecting paths.

5. A node according to claim 4, **characterised in that** said control means (MC) are adapted to establish said hierarchy as a function of a quality of service parameter associated with each connecting path.

6. A node according to claim 5, **characterised in that** said quality of service parameter is a priority level associated with the user of a connecting path.

7. A node according to claim 4, **characterised in that** said control means (MC) are adapted to establish said hierarchy as a function of a criterion as to the order of arrival of said programming data relating to the different connecting paths.

8. A node according to any of claims 1 to 7, **characterised in that** said control means (MC) are adapted to define said ranges of use by means of a flow-based queuing algorithm technique.

9. A node according to claim 8, **characterised in that** said flow-based queuing algorithm technique is selected from a group including the WFQ and WRED techniques.

10. A node according to any of claims 1 to 9, **characterised in that** said signalling means (MS) are adapted to integrate said programming data into a selected object of a signalling message.

11. A node according to claim 10, **characterised in that** said object is selected from a group including at least one pre-existing object and one new dedicated object.

## Patentansprüche

1. Knoten (Ni) für ein Kommunikationsnetz mit Paketadressen- oder Etikettenvermittlung (R), Mittel zur Signalisierung (MS) einschließend, die so aufgebaut sind, dass sie Signalisierungsmeldungen mit anderen Knoten (Ni') dieses Netzes (R) austauschen, um die Reservierung von Ressourcen von Verbindungswegen (LSPk) zu ermöglichen, die jeweils mit einer Verbindungskennung verknüpft sind und an diesem Knoten (Ni) beginnen, **dadurch gekennzeichnet, dass** er Steuerungsmittel (MC) einschließt, die so aufgebaut sind, dass sie Nutzungsintervalle von Verbindungswegen bilden, die zwischen diesem Knoten (Ni) und mindestens einem Ausgangsknoten (N3, N4) dieses Netzes (R) aufgebaut werden sollen, und so aufgebaut sind, dass sie diesen Signalisierungsmitteln (MS) befehlen, an die Knoten (Ni'), die jeweils an diesen aufzubauenden Verbindungswegen (LSPk) beteiligt werden sollen, Signalisierungsmeldungen zu übertragen, welche die Verbindungskennungen der Verbindungswege enthalten, an denen sie mitwirken sollen, und Programmierungsdaten, die für ihre jeweiligen Nutzungsintervalle stehen, und sie auffordern, auf ihrer Steuerungsebene eine Vorreservierung derjenigen Ressourcen vorzunehmen, die für den Aufbau dieser Verbindungswege (LSPk) während Zeitbereichen erforderlich sind, welche von diesen Nutzungsintervallen abhängig sind.

2. Knoten gemäß Anspruch 1, **dadurch gekennzeichnet, dass** diese Steuerungsmittel (MC) so aufgebaut sind, dass sie Programmierungsdaten definieren, die für den Zeitpunkt des Aufbaus und des Endes der Nutzung jedes Nutzungsintervalls bezogen auf eine Referenzuhr stehen.

3. Knoten gemäß Anspruch 1, **dadurch gekennzeichnet, dass** diese Steuerungsmittel (MC) so aufgebaut sind, dass sie Programmierungsdaten definieren, die für das gewünschte Aufbaudatum und die Nutzungsdauer jedes Nutzungsintervalls stehen.

4. Knoten gemäß einem der Ansprüche 1 bis 3, **dadurch gekennzeichnet, dass** beim Vorliegen von Verbindungswegen (LSPk), die zumindest teilweise gleichzeitig genutzt werden sollen und im Falle von lokalen Ressourcen, die für eine gleichzeitige Nutzung nicht ausreichend sind, diese Steuerungsmittel (MC) so aufgebaut sind, dass sie eine Hierarchie zwischen Verbindungswegen (LSPk) erstellen in Abhängigkeit von mindestens einem gewählten Kriterium, um diese Nutzungsbereiche untereinander entsprechend dieser Hierarchie zwischen den zugehörigen Verbindungswegen anzuordnen.

5. Knoten gemäß Anspruch 4, **dadurch gekennzeichnet, dass** diese Steuerungsmittel (MC) so aufgebaut sind, dass sie diese Hierarchie in Abhängigkeit von einem Parameter betreffend die Dienstqualität errichten, der jeweils mit einem Verbindungsweg verknüpft ist.

6. Knoten gemäß Anspruch 5, **dadurch gekennzeichnet, dass** dieser Parameter betreffend die Dienstqualität eine zu dem Nutzer eines Verbindungswegs zugehörige Prioritätsstufe ist.

7. Knoten gemäß Anspruch 4, **dadurch gekennzeichnet, dass** diese Steuerungsmittel (MC) so aufgebaut sind, dass sie diese Hierarchie in Abhängigkeit von einem Kriterium betreffend die Reihenfolge des Eintreffens dieser Programmierungsdaten bezüglich der verschiedenen Verbindungswege errichten.

8. Knoten gemäß einem der Ansprüche 1 bis 7, **dadurch gekennzeichnet, dass** diese Steuerungsmittel (MC) so aufgebaut sind, dass sie diese Nutzungsbereiche mittels einer Technik zur Einordnung des Flusses in eine Warteschlange definieren.

9. Knoten gemäß Anspruch 8, **dadurch gekennzeichnet, dass** diese Technik aus einer Gruppe ausgewählt wird, die mindestens die Techniken mit der Bezeichnung "WFQ" und "WRED" einschließt.

10. Knoten gemäß einem der Ansprüche 1 bis 9, **dadurch gekennzeichnet, dass** diese Signalisierungsmittel (MS) so aufgebaut sind, dass sie diese Programmierungsdaten in ein gewähltes Objekt einer Signalisierungsmeldung integrieren.

11. Knoten gemäß Anspruch 10, **dadurch gekennzeichnet, dass** dieses Objekt aus einer Gruppe gewählt wird, die mindestens ein bereits vorhandenes Objekt und ein neues dediziertes Objekt enthält.
